# EUROPÄISCHE PATENTSCHRIFT

(11) **EP 1 305 603 B1**
(45) Veröffentlichungstag und Bekanntmachung des Hinweises auf die Patenterteilung: **20.10.2004**
(21) Anmeldenummer: 01962607.6
(22) Anmeldetag: 03.08.2001
(51) Int. Cl.: G01N 21/64, G02B 26/04

(54) **EINRICHTUNG ZUM ERFASSEN VON UNTERSCHIEDLICHEN FLUORESZENZSIGNALEN EINES MIT VERSCHIEDENEN ANREGUNGSWELLENLÄNGEN BELEUCHTETEN PROBENTRÄGERS**
DEVICE FOR DETECTING DIFFERENT FLUORESCENCE SIGNALS OF A SAMPLE SUPPORT ILLUMINATED WITH DIFFERENT EXCITATION WAVELENGTHS
DISPOSITIF DE DETECTION DE DIFFERENTS SIGNAUX FLUORESCENTS D'UN PORTE-ECHANTILLON ECLAIRE AVEC DIFFERENTES LONGUEURS D'ONDES D'EXCITATION

(30) Priorität: 04.08.2000 DE 10038185
(43) Veröffentlichungstag der Anmeldung: 02.05.2003
(73) Patentinhaber: SIEMENS AKTIENGESELLSCHAFT, 80333 München (DE)
(72) Erfinder: BOLL, Peter, 82362 Weilheim (DE); DROBNER, Franz, 81371 München (DE); KASSEL, Christian, 85640 Putzbrunn (DE)
(86) Internationale Anmeldenummer: PCT/DE2001/002982
(87) Internationale Veröffentlichungsnummer: WO 2002/012862

(56) Entgegenhaltungen:
- DE-A- 3 915 421
- US-A- 5 053 626
- US-A- 5 491 343
- US-A- 5 535 293

## Beschreibung

Einrichtung zum Erfassen von unterschiedlichen Fluoreszenzsignalen eines mit verschiedenen Anregungswellenlängen beleuchteten Probenträgers

Die Erfindung betrifft eine Einrichtung zum Erfassen von unterschiedlichen Fluoreszenzsignalen eines mit verschiedenen Anregungswellenlängen beleuchteten Probenträgers nach dem Oberbegriff des Patentanspruches 1.

Es sind beispielsweise auf dem Gebiete der Durchführung von quantitativen Fluoreszenzimmunotests Probenträger bekannt, die eine Vielzahl von Elektroden, beispielsweise 10.000 Elektroden, besitzen, die selektiv mit einer elektrischen Spannung beaufschlagbar sind. Wenn über die Elektroden verschiedenen Probenflüssigkeiten geleitet werden, können an den Elektroden, je nach Anliegen bestimmter Spannungen, durch Ablagerung verschiedene Proben erzeugt werden. Da diese Proben mit zwei oder mehr Fluoreszenzträgern markiert sind, leuchten sie bei einer Anregung mit verschiedenen Lichtwellenlängen unterschiedlich. Auf diese Weise können biochemische Eigenschaften gemessen werden.

In diesem Zusammenhang ist es bekannt, dichroitische, fest eingebaute Spiegel zu verwenden, um eine Trennung der verschiedenen Fluoreszenzwellenlängen zu erreichen, die vom Probenträger ausgesendet werden. Ein Problem besteht dabei darin, dass dichroitische Spiegel nur dann betrieben werden können, wenn der Strahlengang an der Position der dichroitischen Spiegel parallel ist. Derartige Spiegel haben zudem keinen 100%igen Wirkungsgrad. Sie benötigen ferner gleichzeitig ein elektrisches Takten der Anregungsquellen.

In der Halbleitertechnik hergestellte Probenträger sind beispielsweise in mehreren Schichten aufgebaut und besitzen eine Vielzahl von zylinderförmigen Platinelektroden, an die die oben genannten Spannungen angelegt werden können. Die Probenträger sind in jeweils mit einer Glasschicht abgedeckten Kunststoffbehältern angeordnet, wobei die genannten Proben-. flüssigkeiten den Raum zwischen Glasschicht und Kunststoffbehälter durchströmen und dabei in Kontakt mit den Elektroden gelangen können.

Die Druckschrift DE 39 26 090 C2 offenbart ein Zweistrahlphotometer, bei dem mittels einer drehbaren, in verspiegelte und durchlässige Sektoren aufgeteilte Spiegeleinrichtung ein von einer Lichtquelle ausgehendes Lichtbündel in einen Messstrahl und in einen Referenzstrahl aufgespalten wird. Beide Strahlengänge werden durch dieselbe Spiegeleinrichtung rekombiniert, wobei der Messstrahl die Spiegeleinrichtung durchdringt und durch eine zu untersuchende Probe hindurchtritt und der Referenzstrahl an der Spiegeleinrichtung reflektiert wird und somit nicht auf die Probe trifft. Der rekombinierte Strahl wird von einer Detektoreinrichtung erfasst. Damit kann bei geeigneter Auswertung der erfassten Messsignale der Einfluss von Schwankungen der Lichtquellenhelligkeit oder der Detektorempfindlichkeit eliminiert werden. Die DE 39 26 090 C2 offenbart ferner gemäß einem Ausführungsbeispiel ein Zweistrahlphotometer mit einer zweiten, ein kontinuierliches Spektrum emittierenden Lichtquelle (siehe Fig.4), deren Strahlung alternierend mit der ersten Lichtquelle sowohl als Messstrahl als auch als Referenzstrahl verwendet wird, wenn eine in vier Sektoren (zwei verspiegelte und zwei lichtdurchlässige Sektoren) aufgeteilte Spiegeleinrichtung verwendet wird. Auf diese Weise kann zusätzlich eine Kompensation von Untergrundstrahlung erzielt werden.

Die Druckschrift DE 39 15 421 offenbart eine Einrichtung zum Erfassen von unterschiedlichen Fluoreszenzsignalen eines mit verschiedenen Anregungswellenlängen ganzflächig beleuchteten Probenträgers, der eine Mehrzahl von mit verschiedenen Lichtwellenlängen zur Abgabe von unterschiedlichem Fluoreszenzlicht anregbaren Proben aufweist,
bei der eine erste Lichtquelle und eine zweite Lichtquelle vorgesehen sind, die Lichtstrahlen unterschiedlicher Lichtwellenlängen erzeugen,
die jeweils über eine Anregungsoptik ganzflächig zum Probenträger gelenkt werden,
bei der das jeweils vom Probenträger ausgesendete Fluoreszenzlicht derart zum entsprechende Fluoreszenzsignale erzeugenden Empfänger gelenkt wird, dass jede Probe auf ein der jeweiligen Probe entsprechendes lichtempfindliches Element des Empfängers abgebildet wird, und
bei der zwischen den verschiedenen Lichtquellen und dem Probenträger eine Spiegelanordnung mit lichtundurchlässigen Bereichen und lichtdurchlässigen Bereichen geschaltet und so bewegbar ist, dass
- der erste Lichtstrahl der ersten Lichtquelle durch den lichtdurchlässigen Bereich zum Probenträger hindurchtritt und der zweite Lichtstrahl der zweiten Lichtquelle vom lichtundurchlässigen Bereich so abgedunkelt wird, dass er den Probenträger nicht erreicht
wobei der Empfänger derart von den Lichtquellen abgeschirmt ist, dass von dem Empfänger ausschließlich von den Proben ausgesandtes Fluoreszenzlicht erfasst wird.

Die Aufgabe der vorliegenden Erfindung besteht darin, eine Einrichtung zum Erfassen von unterschiedlichen Fluoreszenzsignalen eines mit verschiedenen Anregungswellen beleuchteten Probenträgers zu schaffen, bei der ein Takten der die verschiedenen Anregungswellenlängen erzeugenden Lichtquellen nicht erforderlich ist.

Diese Aufgabe wird durch eine Einrichtung mit den Merkmalen des Patentanspruches 1 gelöst.

Der Vorteil der vorliegenden Erfindung besteht darin, dass zur Erfassung von unterschiedlichen Fluoreszenzsignalen eines mit verschiedenen, vorzugsweise zwei, Anregungswellenlängen beleuchteten Probenträgers keine dichroitischen Spiegel verwendet werden müssen, die die oben geschilderten Nachteile aufweisen. Bei der erfindungsgemäßen Einrichtung erfolgt die erforderliche Trennung der Fluoreszenzsignale mit der Hilfe einer im Strahlengang der Anregungs- und Detektionsoptik angeordneten drehbaren Spiegelanordnung, die entsprechend der Anzahl der Anregungswellenlängen bereichsweise durchlässig ist. Diese Spiegelanordnung wird so im Strahlengang bewegt, dass jeweils ein Anregungs-Detektionskanal geöffnet ist und die anderen Anregungs-Detektionskanäle geschlossen sind. Besonders bevorzugt handelt es sich bei der Spiegelanordnung um einen drehbaren Spiegel.

Weitere vorteilhafte Ausgestaltungen der'Erfindung gehen aus den Unteransprüchen hervor. Im folgenden werden die Erfindung und deren Ausgestaltungen im Zusammenhang mit den Figuren näher erläutert. Es zeigen:
- Figur 1: in schematischer Darstellung eine erste Seitenansicht des Detektionteiles der erfindungsgemäßen Einrichtung zum Erfassen von zwei unterschiedliechen Fluoreszenzsignalen eines mit zwei verschiedenen Anregungswellen beleuchteten Probenträgers;
- Figur 2: eine Seitenansicht der gesamten Einrichtung der Figur 1 unter einem um 90° gedrehten Blickwinkel und
- Figur 3: die Aufsicht auf einen drehbaren Spiegel, der für eine Einrichtung zum Erfassen von zwei unterschiedlichen Fluoreszenzsignalen bei zwei verschiedenen Anregungswellen geeignet ist.

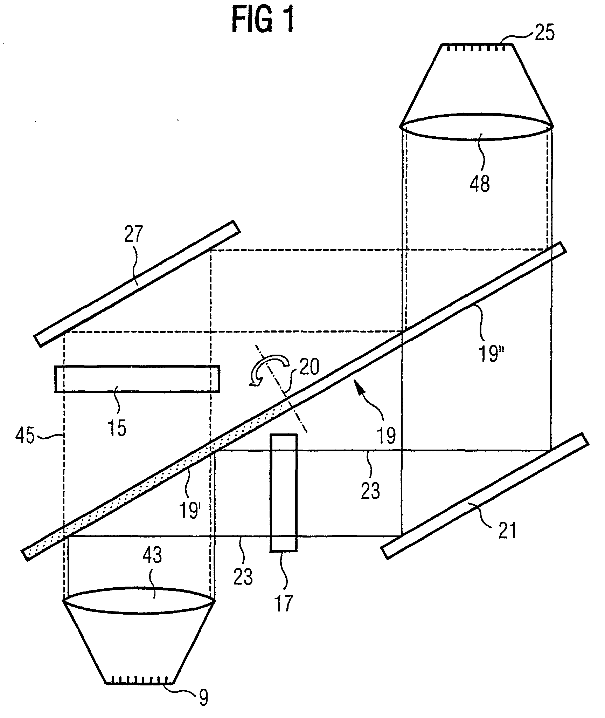

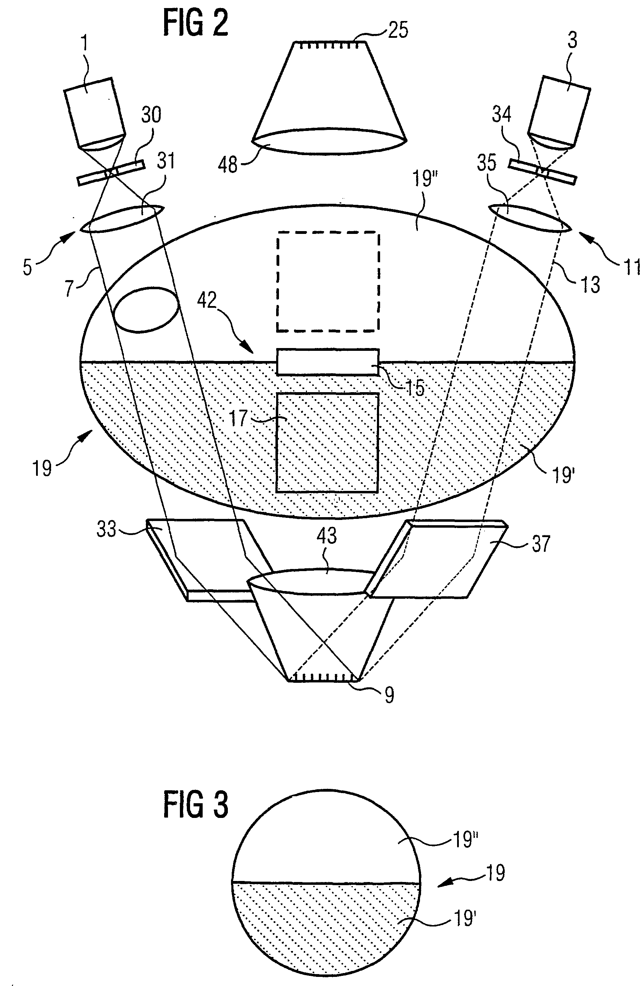

Gemäß den Figuren 1 bis 3, weist eine bevorzugte Einrichtung zum Erfassen von zwei unterschiedlichen Fluoreszenzsignalen bei zwei Anregungswellenlängen, im wesentlichen eine erste Lichtquelle 1, eine zweite Lichtquelle 3, eine erste Anregungsoptik 5, die den ersten Lichtstrahl 7 der ersten Lichtquelle 1 auf einen Probenträger 9 lenkt, eine zweite Anregungsoptik 11, die den zweiten Lichtstrahl 13 der zweiten Lichtquelle 3 auf den Probenträger 9 lenkt, ein einem ersten Fluoreszenzlicht zugeordnetes erstes Filter 15, ein einem zweiten Fluoreszenzlicht zugeordnetes zweites Filter 17, als Spiegelanordnung einen segmentierten drehbaren Spiegel 19, der gemäß Figur 3 einen ersten lichtdurchlässigen Bereich 19" und einen zweiten spiegelnden Bereich 19' besitzt, einen ersten festen Spiegel 21, der das erste Fluoreszenzlicht 23 zum Empfänger 25 reflektiert, und einen zweiten festen Spiegel 27 auf, der das zweite Fluoreszenzlicht zum drehbaren Spiegel 19 leitet, von dem es zum Empfänger 25 reflektiert wird.

Bei der ersten Lichtquelle 1 und der zweiten Lichtquelle 3 handelt es sich vorzugsweise um Laserquellen, wobei die erste Lichtquelle 1 beispielsweise ein Laserlicht einer Wellenlänge von 532 nm und die zweite Lichtquelle 3 beispielsweise ein Laserlicht einer Wellenlänge von 632 nm erzeugen. Bei den Filtern 15 und 17 handelt es sich vorzugsweise um Steilkantfilter, die entweder nur das erste oder zweite Fluoeszenzlicht passieren lassen. Die erste Anregungsoptik 5 umfaßt eine erste Blende 30, und eine erste Linsenanordnung 31, die aus dem von der ersten Lichtquelle 1 erzeugten ersten Laserstrahl einen ersten parallelen Strahl 7 erzeugen, und einen ersten Umlenkspiegel 33, der den parallelen Strahl 7 derart auf den Probenträger 9 lenkt, dass dieser ganzflächig beleuchtet wird.

Entsprechend umfaßt die zweite Anregungsoptik 11 eine zweite Blende 34 und eine zweite Linsenanordnung 35 , die aus dem zweiten Laserstrahl der zweiten Lichtquelle 3 einen zweiten parallelen Strahl 13 erzeugen, und einen zweiten festen Umlenkspiegel 37, der den parallelen Strahl 13 auf den Probenträger 9 leitet, um diesen ganzflächig zu beleuchten.

Der drehbare Spiegel 19 ist um eine Drehachse 20 drehbar und weist den spiegelnden Bereich 19' sowie den lichtdurchlässigen Bereich 19'' auf, die bei der Verwendung von zwei Lichtquellen 1, 3 zweier unterschiedlicher Wellenlängen vorzugsweise jeweils der Hälfte der Fläche des kreisförmigen drehbaren Spiegels 19 entsprechen.

Die Detektionsoptik 42 umfaßt eine dem Probenträger 9 nachgeschaltete optische Abbildungsanordnung 43, die aus dem vom Probenträger 9 abgegebenen ersten und zweiten Fluoreszenzlicht 23 bzw. 45 jeweils einen parallelen Strahl erzeugt und eine dem Empfänger 25 vorgeschaltete optische Abbildungsanordnung 48, die die genannten parallelen Strahlen ganzflächig auf den Empfänger 25 abbildet. Das Filter 15 und der feste Spiegel 27 sowie das Filter 17 und der feste Spiegel 21 sind Teil der Detektionsoptik 42.

Bei dem Empfänger 25 handelt es sich vorzugsweise um eine CCD-Anordnung, die entsprechend der Anzahl der Proben des Probenträgers 9 lichtempfindliche Elemente aufweisen, die entsprechend ihrer Beleuchtung mit dem ersten oder zweiten Fluorenszenzlicht 23 bzw. 45 jeweils ein erstes oder zweites elektrisches Fluoreszenzsignal erzeugen. Diese Fluoreszenzsignale werden zu einer nicht näher dargestellten Auswertelektronik geleitet.

Beispielsweise weisen der Probenträger 9 und der Empfänger 25 Proben bzw. optische Sensorelemente in sich entsprechenden Rasterkonfigurationen in einer Anzahl von Proben bzw. Sensorelementen in der Größenordnung von 10.000 auf.

Im folgenden wird die Funktion der vorliegenden Einrichtung zum Trennen von zwei Fluoreszenzsignalen näher erläutert.

Dabei wird davon ausgegangen, dass sich der spiegelnde Bereich 19' in einer Phase in Figur 1 links von der Drehachse 20 und der durchlässige Bereich 19" rechts von der Drehachse 20 befinden. Dies hat zur Folge, dass der von der ersten Lichtquelle 1 erzeugte erste Laserstrahl 7 durch den durchlässigen Bereich 19'' hindurchtritt und durch die Abbildungsoptik 5 zum Probenträger 9 geleitet wird (Figur 2), um diesen ganzflächig zu beleuchten. Das vom Probenträger 9 infolge der Wellenlänge des ersten Laserstrahles 7 ausgesendete erste Fluoreszenzlicht 23 wird an dem spiegelnden Bereich 19' gespiegelt und auf das Filter 17 gelenkt, tritt durch dieses hindurch, wird am festen Spiegel 21 reflektiert, tritt durch den durchlässigen Bereich 19'' des Spiegels 19 hindurch (Figur 1) und wird durch die Abbildungsoptik 48 auf den Empfänger 25 gelenkt, der an seinen einzelnen lichtempfindlichen Sensorelementen entsprechende Fluoreszenzsignale erzeugt. Während dieser Phase wird der von der zweiten Lichtquelle 3 ausgesendete Laserstrahl 13 am spiegelnden Bereich 19' reflektiert, so dass er nicht zum zweiten Unlenkspiegel 37 und nicht zum Probenträger 9 gelangen kann (Figur 2).

In der anderen Phase, in der sich der spiegelnde Bereich 19' rechts von der Drehachse 20 und der durchlässige Bereich 19'' links von der Drehachse 20 befinden, tritt der zweite Laserstrahl 13 der Lichtquelle 3 durch den durchlässigen Bereich 19'' hindurch und wird durch den zweiten Umlenkspiegel 37 auf den Probenträger 9 gerichtet (Figur 2 mit vertauschten Bereichen 19', 19''). Das dabei erzeugte zweite Fluoreszenzlicht 45 tritt durch den durchlässigen Bereich 19'' hindurch, passiert das Filter 15, wird durch den festen Spiegel 27 zum spiegelnden Bereich 19' des drehbaren Spiegels 19 reflektiert und wird an diesem gespiegelt und zur Abbildungsoptik 44 gelenkt (Figur 1 gepunktete Linien). Von dieser wird das zweite Fluoreszenzlicht 45 auf den Empfänger 25 abgebildet. Die einzelnen optischen Sensorelemente des Empfängers 25 erzeugen dann entsprechende zweite Fluoreszenzsignale. In dieser Phase wird der von der ersten Lichtquelle 1 erzeugte erste Laserstrahl an dem spiegelnden Bereich 19' reflektiert, so dass er nicht zum ersten Umlenkspiegel 33 und auch nicht zum Probenträger 9 gelangen kann.

Auf diese Weise kann durch die Drehbewegung des drehbaren Spiegels 19 zwischen den beiden Laserstrahlen 7 und 13, die gleichzeitig erzeugt werden, um jeweils den Probenträger 9 ganzflächig beleuchten zu können, hin- und hergeschaltet werden, so dass jeweils nur ein Laserstrahl den Probenträger 9 beleuchtet und ein Fluoreszenzlicht erzeugt wird, das zum Empfänger 25 gleitet wird, während der jeweils andere Laserstrahl am spiegelnden Bereich 19" des drehbaren Spiegels 19 reflektiert wird, so dass er nicht zum Empfänger 25 gelangen kann. In aufeinanderfolgender Reihenfolge werden daher an dem Empfänger 25 die unterschiedlichen Fluoreszenzsignale empfangen und, wenn es sich beim Empfänger 25 um eine CCD-Anordnung handelt, zu einer Auswerteelektronik abgetaktet.

Es wird darauf hingewiesen, dass der drehbare Spiegel 19 zur Trennung von mehr als zwei Fluoreszenzsignalen auch mehrere lichtdurchlässige und spiegelnde Bereiche besitzen kann, so dass sichergestellt wird, dass in verschiedenen Phasen immer nur ein Fluoreszenzlicht durch einen Laserstrahl angeregt und zum Empfänger geleitet wird, während die jeweils anderen Laserstrahlen an spiegelnden Bereichen gespiegelt werden, so dass sie kein Fluoreszenzlicht anregen können.

An der Stelle des erläuterten drehbaren Spiegels 19 können auch andere bewegbare Spiegelanordnung verwendet werden. Beispielsweise kann eine lichtdurchlässige und spiegelnde Bereiche nebeneinander in einer Reihe aufweisende Platte in der Richtung der Reihe hin- und herbewegt werden.

## Patentansprüche

1. Einrichtung zum Erfassen von unterschiedlichen Fluoreszenzsignalen eines mit verschiedenen Anregungswellenlängen ganzflächig beleuchteten Probenträgers, der eine Mehrzahl von mit verschiedenen Lichtwellenlängen zur Abgabe von unterschiedlichem Fluoreszenzlicht anregbaren Proben aufweist,
bei der eine erste Lichtquelle (1) und eine zweite Lichtquelle (3) vorgesehen sind, die Lichtstrahlen (7, 13) unterschiedlicher Lichtwellenlängen erzeugen,
die jeweils über eine Anregungsoptik (5, 11) ganzflächig zum Probenträger (9) gelenkt werden,
bei der das jeweils vom Probenträger (9) ausgesendete Fluoreszenzlicht (23, 45) derart zum entsprechende Fluoreszenzsignale erzeugenden Empfänger (25) gelenkt wird, dass jede Probe auf ein der jeweiligen Probe entsprechendes lichtempfindliches Element des Empfängers (25) abgebildet wird, und
bei der zwischen den verschiedenen Lichtquellen (1, 3) und dem Probenträger (9) eine Spiegelanordnung (19) mit verspiegelten Bereichen (19') und lichtdurchlässigen Bereichen (19'') geschaltet und so bewegbar ist, dass
- der erste Lichtstrahl (7) der ersten Lichtquelle (1) durch den lichtdurchlässigen Bereich (19'') zum Probenträger (9) hindurchtritt und der zweite Lichtstrahl (13) der zweiten Lichtquelle (3) vom spiegelnden Bereich (19') so reflektiert wird, dass er den Probenträger (19) nicht erreicht und
- das vom ersten Lichtstrahl (7) erzeugte erste Fluoreszenzlicht (23) zum spiegelnden Bereich (19") ausgesendet wird, der es zu einem ersten festen Spiegel (21) reflektiert und dass der erste feste Spiegel (21) das erste Fluoreszenzlicht (23) durch den durchlässigen Bereich (19'') zum Empfänger (25) reflektiert,
wobei der Empfänger (25) derart von den Lichtquellen (1, 3) abgeschirmt ist, dass von dem Empfänger (25) ausschließlich von den Proben ausgesandtes Fluoreszenzlicht erfasst wird.

2. Einrichtung nach Anspruch 1, **dadurch gekennzeichnet, dass** die Spiegelanordnung (19) ein um eine Achse (20) drehbarer Spiegel ist.

3. Einrichtung nach einem der Ansprüche 1 bis 2, **dadurch gekennzeichnet, dass** der erste Lichtstrahl (7) von einer ersten Anregungsoptik (5) zum Probenträger (9) lenkbar ist, um diesen ganzflächig zu beleuchten.

4. Einrichtung nach einem der Ansprüche 1 bis 3, **dadurch gekennzeichnet, dass** der zweite Lichtstrahl (13) durch eine zweite Anregungsoptik (11) zum Probenträger (9) lenkbar ist, um diesen ganzflächig zu beleuchten.

5. Einrichtung nach einem der Ansprüche 1 bis 4, **dadurch gekennzeichnet, dass** das vom zweiten Lichtstrahl (13) erzeugte zweite Fluoreszenzlicht (45) vom Probenträger (9) durch den durchlässigen Bereich (19'') des Spiegels (19) hindurchtritt und von einem zweiten festen Spiegel (27) auf den spiegelnden Bereich (19') des Spiegels (19) reflektiert wird und von dem spiegelnden Bereich (19') des Spiegels (19) zum Empfänger (25) reflektiert wird.

6. Einrichtung nach einem der Ansprüche 2 bis 5, **dadurch gekennzeichnet, dass** der drehbare Spiegel kreisförmig ausgebildet ist und einen halbkreisförmigen durchlässigen Bereich (19') und einen halbkreisförmigen spiegelnden Bereich (19') aufweist.

7. Einrichtung nach einem der Ansprüche 3 bis 6, **dadurch gekennzeichnet, dass** die erste Anregungsoptik (5) einen ersten Umlenkspiegel (33) aufweist, der den ersten Lichtstrahl (7) zum Probenträger (9) lenkt.

8. Einrichtung nach einem der Ansprüche 4 bis 7, **dadurch gekennzeichnet, dass** die zweite Anregungsoptik (11) einen zweiten Umlenkspiegel (37) aufweist, der den zweiten Lichtstrahl (13) zum Probenträger (9) lenkt.

9. Einrichtung nach einem der Ansprüche 1 bis 8, **dadurch gekennzeichnet**, das zwischen dem Probenträger (9) und dem Empfänger (25) im Strahlengang des ersten Fluoreszenzlichtes (23) ein erstes Filter (17) vorgesehen ist, das nur das erste Fluoreszenzlicht (23) passieren läßt.

10. Einrichtung nach einem der Ansprüche 5 bis 9, **dadurch gekennzeichnet, dass** im Strahlengang des zweiten Fluoreszenzlichtes (45) zwischen dem Probenträger (9) und dem Empfänger (25) ein zweites Filter (15) vorgesehen ist, das nur das zweite Fluoreszenzlicht passieren läßt.

11. Einrichtung nach Anspruch 9 oder 10, **dadurch gekennzeichnet, dass** das erste Filter (17) und/oder das zweite Filter (15) ein Steilkantfilter ist.

12. Einrichtung nach einem der Ansprüche 1 bis 11, **dadurch gekennzeichnet, dass** der Empfänger (25) eine CCD-Anordnung ist, die zur Erzeugung elektrischer Fluoreszenzsignale aus dem empfangenen ersten oder zweiten Fluoreszenzlicht (23, 45) optische Sensorelemente aufweist, die entsprechend einer bestimmten Anordnung der Proben des Probenträgers (9) angeordnet sind, wobei die an den Sensorelementen während der Beleuchtung mit einem Fluoreszenzlicht erzeugten elektrischen Fluoreszenzsignale vor der Beleuchtung mit dem anderen Fluoreszenzlicht zu einer Auswerteelektronik abgetaktet werden.

## Claims

1. Device for detecting different fluorescence signals of a sample carrier illuminated over its entire surface by different excitation wavelengths, which has a plurality of samples that can be excited by different optical wavelengths to output different fluorescent light,
in which a first light source (1) and a second light source (3) are provided which generate light beams (7, 13) of different optical wavelengths, which are directed via an excitation optical system (5, 11) in each case to the entire surface of the sample carrier (9),
in the case of which the fluorescent light (23, 45) respectively emitted by the sample carrier (9) is directed to the receiver (25) generating corresponding fluorescence signals in such a way that each sample is projected onto a photosensitive element, corresponding to the respective sample, of the receiver (25), and in the case of which a mirror arrangement (19) with reflecting regions (19') and transmitting regions (19") is connected between the different light sources (1, 3) and the sample carrier (9) and is capable of moving such that
- the first light beam (7) of the first light source (1) passes through the transmitting region (19") to the sample carrier (9), and the second light beam (13) from the second light source (3) is reflected from the reflecting region (19') such that it does not reach the sample carrier (19), and
- the first fluorescent light (23) generated by the first light beam (7) is emitted to the reflecting region (19), which reflects it to a first fixed mirror (21), and that the first fixed mirror (21) reflects the first fluorescent light (23) through the transmitting region (19") to the receiver (25), the receiver (25) being screened from the light sources (1, 3) in such a way that the receiver (25) exclusively detects fluorescent light emitted by the samples.

2. Device according to Claim 1, **characterized in that** the mirror arrangement (19) is a mirror that can be rotated about an axis (20).

3. Device according to one of Claims 1 to 2, **characterized in that** the first light beam (7) can be directed by a first excitation optical system (5) to the sample carrier (9) in order to illuminate the entire surface of the latter.

4. Device according to one of Claims 1 to 3, **characterized in that** the second light beam (13) can be directed by a second excitation optical system (11) to the sample carrier (9) in order to illuminate the entire surface of the latter.

5. Device according to one of Claims 1 to 4, **characterized in that** the second fluorescent light (45) generated by the second light beam (13) passes from the sample carrier (9) through the transmitting region (19") of the mirror (19), and is reflected from a second fixed mirror (27) onto the reflecting region (19') of the mirror (19) and is reflected from the reflecting region (1.9') of the mirror (19) to the receiver (25).

6. Device according to one of Claims 2 to 5, **characterized in that** the rotatable mirror is of circular design and has a semicircular transmitting region (19') and a semicircular reflecting region (19').

7. Device according to one of Claims 3 to 6, **characterized in that** the first excitation optical system (5) has a first deflecting mirror (33) that directs the first light beam (7) to the sample carrier (9).

8. Device according to one of Claims 4 to 7, **characterized in that** the second excitation optical system (11) has a second deflecting mirror (37) that directs the second light beam (13) to the sample carrier (9).

9. Device according to one of Claims 1 to 8, **characterized in that** provided between the sample carrier (9) and the receiver (25) in the beam path of the first fluorescent light (23) is a first filter (17), which passes only the first fluorescent light (23).

10. Device according to one of Claims 5 to 9, **characterized in that** there is provided in the beam path of the second fluorescent light (45) between the sample carrier (9) and the receiver (25) a second filter (15), which passes only the second fluorescent light.

11. Device according to Claim 9 or 10, **characterized in that** the first filter (17) and/or the second filter (15) is a steep-edge filter.

12. Device according to one of Claims 1 to 11, **characterized in that** the receiver (25) is a CCD arrangement that has for the purpose of generating electric fluorescence signals from the received first or second fluorescent light (23, 45) optical sensor elements that are arranged in accordance with a specific arrangement of the samples of the sample carrier (9), the electric fluorescence signals generated at the sensor elements during illumination by a fluorescent light being latched to an electronic evaluation system before the illumination by the other fluorescent light.

## Revendications

1. Dispositif pour la détection de différents signaux fluorescents d'un porte-échantillon éclairé sur toute la surface avec différentes longueurs d'ondes d'excitation, qui présente une pluralité d'échantillons pouvant être excités avec différentes longueurs d'ondes de lumière pour l'émission de lumière fluorescente différente,
sur lequel une première source de lumière (1) et une seconde source de lumière (3) sont prévues, qui génèrent des faisceaux de lumière (7, 13) présentant des longueurs d'ondes de lumière différentes,
qui sont dirigés respectivement au moyen d'une optique d'excitation (5, 11) sur toute la surface vers le porte-échantillon (9),
sur lequel la lumière fluorescente (23, 45) respectivement émise par le porte-échantillon (9) est dirigée vers le récepteur (25) générant des signaux fluorescents appropriés de telle sorte que chaque échantillon est reproduit sur un élément, sensible à la lumière et correspondant à l'échantillon respectif, du récepteur (25), et
sur lequel un dispositif de miroir (19) avec des zones (19') réfléchissantes et des zones (19") transparentes est commuté et déplacé entre les différentes sources de lumière (1, 3) et le porte-échantillon (9) de telle sorte que
- le premier faisceau lumineux (7) de la première source de lumière (1) passe à travers la zone (19") transparente vers le porte-échantillon (9) et le second faisceau lumineux (13) de la seconde source lumineuse (3) est réfléchi par la zone (19') réfléchissante de sorte qu'il n'atteint pas le porte-échantillon (19) et
- la première lumière fluorescente (23) générée par le premier faisceau lumineux (7) est émise vers la zone (19") réfléchissante, qui le réfléchit vers un premier miroir (21) fixe et en ce que le premier miroir (21) fixe réfléchit la première lumière fluorescente (23) à travers la zone transparente (19") vers le récepteur (25),
le récepteur (25) étant protégé des sources lumineuses (1, 3) de telle sorte que seule la lumière fluorescente émise par les échantillons est détectée par le récepteur (25).

2. Dispositif selon la revendication 1, **caractérisé en ce que** le dispositif de miroir (19) est un miroir pouvant tourner autour d'un axe (20).

3. Dispositif selon l'une quelconque des revendications 1 à 2, **caractérisé en ce que** le premier faisceau lumineux (7) peut être guidé par une première optique d'excitation (5) vers le porte-échantillon (9), afin de l'éclairer sur toute la surface.

4. Dispositif selon l'une quelconque des revendications 1 à 3, **caractérisé en ce que** le second faisceau lumineux (13) peut être guidé par une seconde optique d'excitation (11) vers le porte-échantillon (9), afin de l'éclairer sur toute la surface.

5. Dispositif selon l'une quelconque des revendications 1 à 4, **caractérisé en ce que** la seconde lumière fluorescente (45) générée par le second faisceau lumineux (13) et venant du porte-échantillon (9) passe à travers la zone (19") transparente du miroir (19), est réfléchie par un second miroir (27) fixe sur la zone (19') réfléchissante du miroir (19) et est réfléchie par la zone (19') réfléchissante du miroir (19) vers le récepteur (25).

6. Dispositif selon l'une quelconque des revendications 2 à 5, **caractérisé en ce que** le miroir rotatif est conçu avec une forme circulaire et présente une zone (19') transparente semi-circulaire et une zone (19') réfléchissante semi-circulaire.

7. Dispositif selon l'une quelconque des revendications 3 à 6, **caractérisé en ce que** la première optique d'excitation (5) présente un premier miroir de déviation (33), qui guide le premier faisceau lumineux (7) vers le porte-échantillon (9).

8. Dispositif selon l'une quelconque des revendications 4 à 7, **caractérisé en ce que** la seconde optique d'excitation (11) présente un second miroir de déviation (37), qui guide le second faisceau lumineux (13) vers le porte-échantillon (9).

9. Dispositif selon l'une quelconque des revendications 1 à 8, **caractérisé en ce que**, entre le porte-échantillon (9) et le récepteur (25), il est prévu dans la trajectoire du faisceau de la première lumière fluorescente (23) un premier filtre (17) qui laisse passer seulement la première lumière fluorescente (23).

10. Dispositif selon l'une quelconque des revendications 5 à 9, **caractérisé en ce que**, dans la trajectoire du faisceau de la seconde lumière fluorescente (45) entre le porte-échantillon (9) et le récepteur (25), il est prévu un second filtre (15) qui laisse passer seulement la seconde lumière fluorescente.

11. Dispositif selon la revendication 9 ou 10, **caractérisé en ce que** le premier filtre (17) et/ou le second filtre (15) est un filtre à flanc raide.

12. Dispositif selon l'une quelconque des revendications 1 à 11, **caractérisé en ce que** le récepteur (25) est un dispositif CCD, qui présente pour la génération de signaux fluorescents électriques à partir de la première ou de la seconde lumière fluorescente (23, 45) reçues des capteurs optiques qui sont disposés en fonction d'une disposition définie des échantillons du porte-échantillon (9), les signaux fluorescents électriques générés sur les éléments capteurs pendant l'éclairage avec une lumière fluorescente étant dirigés avant l'éclairage avec l'autre lumière fluorescente vers une électronique d'analyse.
